# EUROPEAN PATENT SPECIFICATION

(11) **EP 2 939 517 B1**
(45) Date of publication and mention of the grant of the patent: **22.03.2017**
(21) Application number: 15165760.8
(22) Date of filing: 29.04.2015
(51) Int. Cl.: A01D 34/73

(54) **MOWER CONDITIONER KNIFE REMOVAL TOOL WITH WEAR GAUGE**
ENTFERNUNGSWERKZEUG FÜR MÄHBALKENKLINGE MIT VERSCHLEISSMESSER
OUTIL DE RETRAIT DE COUTEAU DE FAUCHEUSE-CONDITIONNEUSE AVEC INDICATEUR D'USURE

(30) Priority: 30.04.2014 US 201414265431
(43) Date of publication of application: 04.11.2015
(73) Proprietor: CNH Industrial Belgium nv, 8210 Zedelgem (BE)
(72) Inventor: Fay, Jeffrey B. II, Wilmington, DE Delaware 19803 (US)
(74) Representative: CNH Industrial IP Department

(56) References cited:
- NL-A- 8 204 562
- US-A1- 2013 055 546
- US-B1- 6 829 878

## Description

### Field of the Invention

The subject disclosure relates to mower conditioners, and, more specifically, to tools used to replace mower conditioner blades and to measure wear of their mounting.

### Description of the Related Art

For a number of years in the agricultural field and most roadside mowing, the disc mower has experienced widespread use. It consists of opposed blades mounted on a rotating cover to cut material. Frequently, disc mowers are utilized in multiples, and for this purpose the rotation of the discs is synchronized. The blades are pivotally mounted to their cover so they will more easily recover when they hit an obstruction.

A key feature of the successful utilization of this technology is an arrangement for quickly changing the individual blades when they are either damaged or no longer sharp enough to perform their function. A number of proposals have been employed to facilitate this feature. They consist of mounting the blades to the rotating housing through a pivotal element and holding the blades on the element through a spring. The blades are then replaced by using a tool to pry the spring clear of the pivotal mounting so that the old blade may be removed and the new blade installed. In time, the pivotal mounting for the blade may wear to the point where it interferes with the means to secure the pivotal mounting to the cover. Currently, operators are required to visually inspect the pivotal mounting to ascertain wear. This involves an inspection of the underside of the cover which is, at best, inconvenient in the field.

US-A-6829878 discloses a tool with the features of the preamble of claim 1.

### Summary

The following presents a simplified summary in order to provide a basic understanding of some aspects of the disclosed examples. This summary is not an extensive overview and is intended to neither identify key or critical elements nor delineate the scope of such aspects. Its purpose is to present some concepts in a simplified form as a prelude to the more detailed description that is presented later.

The subject disclosure, in one form, provides a tool for removing and installing mower conditioner blades and for measuring the wear of their mounting elements.

In one form, the subject disclosure includes a removal and installation tool for blades pivotally mounted around the periphery of a cover for a mower conditioner, the blades having openings for pivotal interconnection with corresponding cylindrical surfaces around annular elements mounted on the cover and springs for retaining the blades on the annular elements with pivotal interconnections. The tool includes an elongated handle and a pair of forked extensions for straddling the blades and prying the springs clear of the annular element. The tool has indicia at a predetermined distance from a reference edge on the tool, the predetermined distance being substantially equal to the wear limit of the cylindrical surfaces of the annular elements.

An advantage of the subject disclosure is the measurement of wear from the top side of a mower conditioner.

Another advantage is the measurement of wear with the same tool used to replace the blades on a mower conditioner.

To the accomplishment of the foregoing and related ends, one or more examples comprise the features hereinafter fully described and particularly pointed out in the claims. The following description and the annexed drawings set forth in detail certain illustrative aspects and are indicative of but a few of the various ways in which the principles of the various aspects may be employed. Other advantages and novel features will become apparent from the following detailed description when considered in conjunction with the drawings and the disclosed examples are intended to include all such aspects and their equivalents.

### Brief description of the drawings

The above-mentioned and other features and advantages, and the manner of attaining them, will become more apparent and the subject disclosure will be better understood by reference to the following description of an embodiment of the subject disclosure taken in conjunction with the accompanying drawings, wherein:
Fig. 1 is a top view of a portion of a mower conditioner including a tool for measuring wear;
Fig. 2 is a partial side view of the mower conditioner of Fig. 1 taken on lines 2-2 of Fig. 1;
Fig. 3 is a bottom view of Fig. 2 taken on lines 3-3 of Fig. 2;

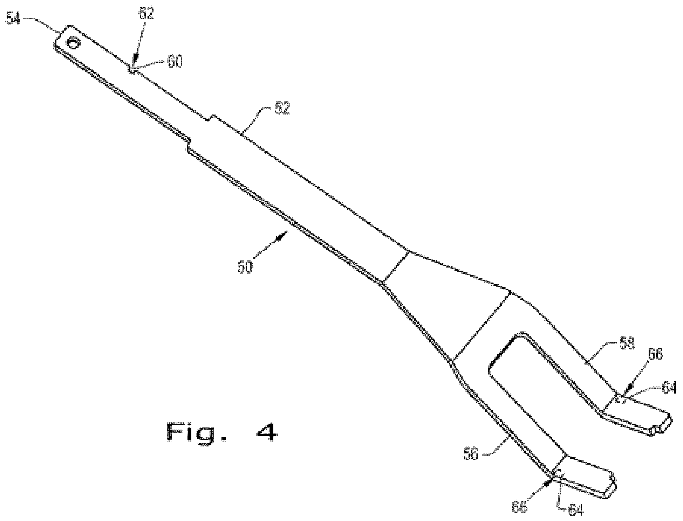

Fig. 4 is a perspective view of the tool used with the mower conditioner of Figs. 1-3; and
Fig. 5 shows the tool of Fig. 4 used to determine the limits of wear for the mower conditioner set out in Figs. 1-3.

Corresponding reference characters indicate corresponding parts throughout the several views. The exemplifications set out herein illustrate embodiments of the subject disclosure and such exemplifications are not to be construed as limiting the scope of the subject disclosure in any manner.

### Detailed description

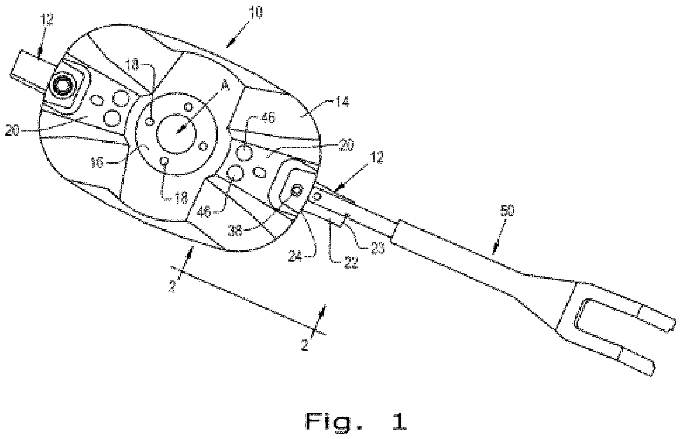

Referring now to the drawings, and more particularly to Fig. 1, there is shown a portion of a mower conditioner 10 including opposed blades 12 mounted on a cover 14 for pivotal rotation about axis A. An annular mounting section 16 on cover 14 includes openings 18 through which appropriate fasteners (not shown) secure housing 14 for rotation about axis A. Recesses 20 in cover 14 provide clearance for mounting of the blades 12, as will be described below.

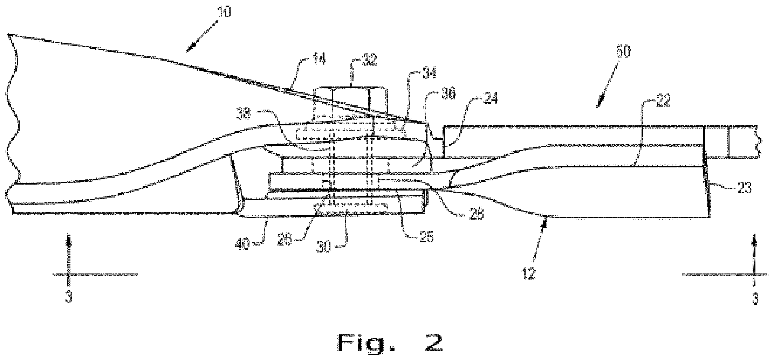

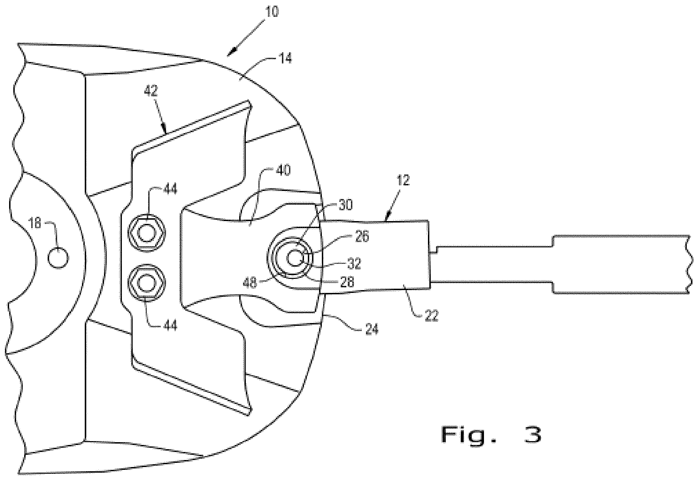

Blades 12 have cutting edges 22, tips 23 and blade roots 25. Blades 12 extend radially outward from the periphery 24 of cover 14. As shown particularly in Figs. 2 and 3, the blade root 25 has a circular opening 26 which corresponds to a cylindrical surface 28 about which the blades 12 can pivot. Cylindrical surface 28 is formed on a threaded annular element 30, or nut, which is fastened to cover 14 by means of a screw 32 passing through washer 34 on the upper surface of cover 14. A spacer washer 36 is positioned around threaded element 30 and an opening 38 in the root 25 of blade 12 circumscribes the cylindrical surface 28 so that the blade is free to pivot through a limited range.

The blade 12 is held on the threaded element 30 by a spring retainer 40 illustrated particularly in Figs. 2 and 3. The spring retainer 40 is sandwiched between a deflector 42 and the underside of cover 14 by nuts 44 shown in Fig. 3 and lag screws 46 shown in Fig. 1. An opening 48 in spring retainer 40 allows it to clear the cylindrical surface 28 of threaded element 30 and urge the bottom side of the root 25 of blade 12 against the spacer washer 36 to hold it in place.

In accordance with the subject disclosure, a tool 50 can be provided for removing and installing blades 12 in addition to determining permissible wear between the blades 12 and their pivotal interconnection with the cover 14. The tool 50 can have a handle 52 with an edge 54. Forked extensions 56 and 58 extend from handle 52 and are spaced to straddle blade 12 so that they may be positioned between the underside of cover 14 and the spring retainer 40 to deflect it downward sufficiently to clear threaded element 30 and permit the installation or removal of blades 12. Indicia 60 can be provided on handle 52 to provide an indication that the wear on the pivotal interconnection, namely through threaded element 30 is sufficient to cause threaded element 30 to be replaced. This can be done by placing the edge 54 of tool 50, which may form a reference edge, against the periphery 24 of cover 14 in line with blade 22. A normal range of wear is illustrated in Fig. 3 in which the tip 23 of blade 12 does not reach indicia 60. Indicia 60 can be an edge of a notch 62 furthest from the reference edge 54 that circumscribes a tolerable wear condition for the threaded element 30. The tolerable wear condition is one where the cylindrical surface 28 has not worn to the point where it surface extends into the threads of screw 32.

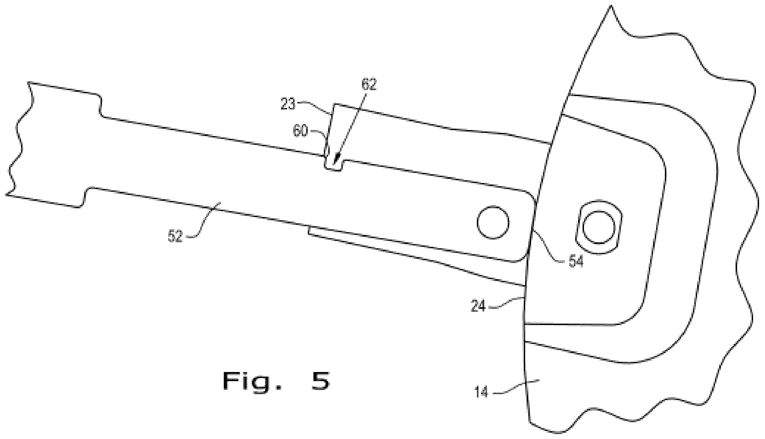

The provision of the indicia 60 on the handle of tool 50 permits removal and installation and wear determination with a single tool, thus eliminating the possibility that a separate measuring device can be lost. As illustrated in Figs. 1 and 5, the measurement of wear is from the upper side of cover 14 to greatly facilitate operator inspection in the field. Although illustrated on the handle 52, the indicia 60 may be alternately provided either of the forked extensions 56 and 58 as shown by dashed lines 64 including notches 66.

While this invention has been described with respect to at least one embodiment, the subject disclosure can be further modified within the limits of the appended claims.

## Claims

1. A removal and installation tool (50) for blades (12) pivotally mounted around a cover (14) for a mower conditioner (10), the cover (14) having a periphery (24), said blades (12) having openings (26) for pivotal interconnection with corresponding cylindrical surfaces (28) around annular elements (30) mounted on the cover (14) and springs (40) for retaining the blades (12) on the annular elements (30) with pivotal interconnections, said tool (50) comprising:
an elongated handle (52); and,
a pair of forked extensions (56, 58) connected to said handle (52), said forked extensions being spaced to straddle the blades (12) and pry the springs (40) clear of said annular elements (30),
**said tool (50) characterized by**
said tool (50) having indicia (60, 64) at a predetermined distance from a reference edge on said tool, said predetermined distance being substantially equal to the distance of the blade tips (23) from the periphery (24) of the cover which exceeds the wear limit of the cylindrical surfaces (28) of said annular elements (30).

2. The installation and removal tool (50) of claim 1, wherein said handle (52) and forked extensions (56, 58) are in a unitary tool.

3. The removal and installation tool of claim 2, wherein said tool (50) is formed of a metal sheet material.

4. The removal and installation tool of any of the preceding claims, wherein said indicia (60, 64) is provided by a notch (62, 66) on the tool (50) with the edge of the notch (62, 64) furthest from the reference edge being the limit of wear.

5. The removal and installation tool (50) of any of the preceding claims, wherein the indicia (60) is provided on the handle (52).

6. The removal and installation tool (50) of claim 5, wherein the handle (52) has a notch (62) with the edge of the notch (62) furthest from the reference edge (54) being the limits of wear.

7. The removal and installation tool (50) of any of the preceding claims, wherein the tool (50) is bent for facilitating prying of the spring (40).

8. The removal and installation tool (50) of any of the preceding claims, wherein the indicia (64) is provided on at least one of said forked extensions (56, 58).

9. The removal and installation tool (50) of claim 8, having a notch (66) on at least one of said forks (56, 58), the end of the fork (56, 58) being said reference surface edge and the edge of the notch (66) being furthest from the reference edge being the limit of wear.

## Patentansprüche

1. Ein Ausbau- und Einbau-Werkzeug (50) für Klingen (12), die schwenkbar um eine Abdeckung (14) herum angeordnet sind, für einen Mähwender (10) wobei die Abdeckung (14) einen Umfang (24) aufweist, wobei die Klingen (12) Öffnungen (26) für eine schwenkbare gegenseitige Verbindung mit entsprechenden zylindrischen Oberflächen (28) um ringförmige Elemente (30) herum aufweisen, die auf der Abdeckung (14) befestigt sind, und Federn (40) zum Festhalten der Klingen (12) auf den ringförmigen Elementen (30) mit schwenkförmigen Verbindungen, wobei das Werkzeug (50) Folgendes umfasst:
einen langgestreckten Handgriff (52); und
ein Paar von gegabelten Verlängerungen (56, 58), die mit dem Handgriff (52) verbunden sind, wobei die gegabelten Verlängerungen in Abstand voneinander angeordnet sind, um die Klingen (12) zu überspannen und die Federn (40) außer Eingriff mit den ringförmigen Elementen (30) aufzuspreizen,
wobei das Werkzeug (50) **dadurch gekennzeichnet ist, dass**
das Werkzeug (50) Indizes (60, 64) an einer vorgegebenen Entfernung von einer Bezugskante auf dem Werkzeug aufweisen, wobei die vorgegebene Entfernung im Wesentlichen gleich der Entfernung der Klingenspitzen (23) von dem Umfang (24) der Abdeckung ist, die eine Verschleißgrenze der zylindrischen Oberflächen (28) der ringförmigen Elemente (30) übersteigt.

2. Das Ausbau- und Einbau-Werkzeug (50) nach Anspruch 1, bei dem der Handgriff (52) und die gegabelten Verlängerungen (56, 58) ein einstückiges Werkzeug sind.

3. Das Ausbau- und Einbau-Werkzeug nach Anspruch 2, bei dem das Werkzeug (50) aus Metallblech-Material gebildet ist.

4. Das Ausbau- und Einbau-Werkzeug nach einem der vorhergehenden Ansprüche, bei dem die Indizes (60, 64) durch eine Kerbe (62, 66) auf dem Werkzeug (50) gebildet sind, wobei die Kante der Kerbe (62, 64), die am weitesten von der Bezugskante entfernt ist, die Grenze des Verschleißes ist.

5. Das Ausbau- und Einbau-Werkzeug (50) nach einem der vorhergehenden Ansprüche, bei dem die Indizes (60) auf dem Handgriff (52) vorgesehen sind.

6. Das Ausbau- und Einbau-Werkzeug (50) nach Anspruch 5, bei dem der Handgriff (52) eine Kerbe (62) aufweist, wobei die Kante der Kerbe (52), die am weitesten von der Bezugskante (54) entfernt ist, die Grenze des Verschleißes ist.

7. Das Ausbau- und Einbau-Werkzeug (50) nach einem der vorhergehenden Ansprüche, bei dem das Werkzeug (50) gebogen ist, um das Aufspreizen der Feder (40) zu erleichtern.

8. Das Ausbau- und Einbau-Werkzeug (50) nach einem der vorhergehenden Ansprüche, bei dem die Indizes (64) auf zumindest einer der gegabelten Verlängerungen (56, 58) vorgesehen sind.

9. Das Ausbau- und Einbau-Werkzeug (50) nach Anspruch 8, das eine Kerbe (66) auf zumindest einer der Gabeln (56, 58) aufweist, wobei das Ende der Gabel (56, 58) die Bezugsoberflächenkante ist, und die weiter von der Bezugskante entfernte Kante der Kerbe (66) die Grenze des Verschleißes ist.

## Revendications

1. Outil d'enlèvement et d'installation (50) de lames (12) montées de façon pivotante autour d'un capot (14) pour une faucheuse-conditionneuse (10), le capot (14) ayant une périphérie (24), lesdites lames (12) comportant des ouvertures (26) permettant une interconnexion pivotante avec des surfaces cylindriques correspondantes (28) autour d'éléments annulaires (30) montés sur le couvercle (14) et des ressorts (40) pour retenir les lames (12) sur les éléments annulaires (30) avec des interconnections pivotantes, ledit outil (50) comprenant :
une poignée (52) allongée, et
une paire de prolongements fourchus (56, 58) connectés à ladite poignée (52), lesdits prolongements étant espacés pour chevaucher les lames (12) et forcer les ressorts (40) hors des dits éléments annulaires (30),
ledit outil (50) étant **caractérisé en ce que** :
ledit outil (50) comporte une marque (60, 64) à une distance prédéterminée d'un bord de référence sur ledit outil, ladite distance prédéterminée étant sensiblement égale à la distance des pointes de lame (23) depuis la périphérie (24) du capot qui dépasse la limite d'usure des surfaces cylindriques (28) des dits éléments annulaires (30).

2. Outil d'enlèvement et d'installation (50) selon la revendication 1, duquel ladite poignée (52) et ces prolongements fourchus (56, 58) sont dans un outil unitaire.

3. Outil d'enlèvement et d'installation selon la revendication 2, cet outil (50) étant constitué d'un matériau de tôle métallique.

4. Outil d'enlèvement et d'installation selon l'une quelconque des revendications précédentes, dans lequel ladite marque (60, 64) est procurée par une encoche (62, 66) sur l'outil (50), le bord de l'encoche (62, 64) le plus éloigné du bord de référence étant la limite d'usure.

5. Outil d'enlèvement et d'installation (50) selon l'une quelconque des revendications précédentes, dans lequel la marque (60) est procurée sur la poignée (52).

6. Outil d'enlèvement et d'installation (50) selon la revendication 5, duquel la poignée (52) comporte une encoche (62), le bord de l'encoche (62) le plus éloigné du bord de référence (54) étant la limite d'usure.

7. Outil d'enlèvement et d'installation (50) selon l'une quelconque des revendications précédentes, l'outil (50) étant courbé pour faciliter le forçage du ressort (40).

8. Outil d'enlèvement et d'installation (50) selon l'une quelconque des revendications précédentes, dans lequel la marque (64) est procurée sur au moins un des dits prolongements fourchus (56, 58).

9. Outil d'enlèvement et d'installation (50) selon la revendication 8, comportant une encoche (66) sur au moins une des dites fourches (56, 58), l'extrémité de la fourche (56, 58) étant ledit bord de surface de référence et le bord de l'encoche (66) le plus éloigné du bord de référence étant la limite d'usure.
